Europäisches Patentamt

European Patent Office

Office européen des brevets

(19)

(11) Veröffentlichungsnummer: **0 322 662 B1**

(12) **EUROPÄISCHE PATENTSCHRIFT**

(45) Veröffentlichungstag der Patentschrift: **03.06.92**

(21) Anmeldenummer: **88120966.2**

(22) Anmeldetag: **15.12.88**

(51) Int. Cl.⁵: **F16L 11/12**, F16L 11/11

(54) **Brauseschlauch und Verfahren zu seiner Herstellung.**

(30) Priorität: **24.12.87 DE 3744108**

(43) Veröffentlichungstag der Anmeldung:
**05.07.89 Patentblatt 89/27**

(45) Bekanntmachung des Hinweises auf die
Patenterteilung:
**03.06.92 Patentblatt 92/23**

(84) Benannte Vertragsstaaten:
**AT BE CH DE ES FR GB GR IT LI LU NL SE**

(56) Entgegenhaltungen:
**EP-A- 0 289 369**
**DE-A- 3 436 774**
**DE-U- 6 937 013**
**FR-A- 2 391 410**
**GB-A- 1 259 256**

(73) Patentinhaber: **Hans Grohe GmbH & Co. KG**
**Auestrasse 9**
**W-7622 Schiltach(DE)**

(72) Erfinder: **Akaltan, Zafer**
**Schenkenzellerstrasse 16**
**W-7622 Schiltach(DE)**

(74) Vertreter: **Patentanwälte RUFF, BEIER und**
**SCHÖNDORF**
**Neckarstrasse 50**
**W-7000 Stuttgart 1(DE)**

## Beschreibung

Die Erfindung betrifft einen Brauseschlauch mit einem flexiblen Innenschlauch und einem flexiblen Außenschlauch, die im Abstand koaxial zueinander angeordnet sind, und wendelförmig umlaufenden Verstärkungsrippen aus thermoplastischem Material, die aus dem plastischen Zustand heraus um den Innenschlauch geformt und zumindest mit der Außenfläche des Innenschlauches fest verbunden sind und mindestens bereichsweise Abstandhalter zwischen Innen- und Außenschlauch bilden, sowie ein Verfahren zu seiner Herstellung.

Bei der Herstellung bekannter Schläuche der vorgenannten Art wird ein vorgefertigter Innenschlauch, der beispielsweise aus Gummi oder Weichplastik bestehen kann, auf seiner Außenschicht mit einer Kleberschicht versehen, wonach, gegebenenfalls nach vorheriger Zwischenauflage von in Längsrichtung verlaufenden Verstärkungsfäden, auf den Innenschlauch, solange er sich noch auf einem Dorn befindet, eine Verstärkungswendel aus Hartplastik oder dergleichen aufgewickelt wird. Dabei kann die Verstärkungswendel auch in einer Umhüllung aus Weichplastik angeordnet sein. Um den Innenschlauch mit der Verstärkungswendel kann dann der Außenschlauch, der in der Regel aus durchsichtigem Weichplastik besteht, extrudiert werden.

Ein flexibler Kunststoffschlauch bestehend aus einem extrudierten Innenschlauch und einem extrudierten Außenschlauch aus thermoplastischem oder elastischem Material mit vorgefertigter spiralförmig angeordneter Verstärkungswendel aus relativ hartem thermoplastischem oder elastischem Material ist in FR-A-23 91 410 beschrieben.

Aus dem deutschen Gebrauchsmuster Hr. 69 37 013 und der im wesentlichen inhaltsgleichen britischen Patentschrift Nr. 12 59 256 ist es bekannt, eine Verstärkungswendel aus Kunststoff um den Innenschlauch herum zu extrudieren, wobei eine Verbindung der Verstärkungswendel mit dem Innenschlauch durch Verschweißung während der Extrusion erfolgt. Zusätzlich ist die Verstärkungswendel entweder durch weitgehendes Einschließen in den Außenschlauch oder durch Ausfüllen der Zwischenräume zwischen den Windungen der Wendel mit Hilfe eines Schaumkunststoffes in ihrer Lage festgehalten.

Die bekannten Brauseschläuche haben eine ausreichende Gebrauchsqualität und Lebensdauer. Ihre Bauweise ist verhältnismäßig kompliziert und es müssen bestimmte Materialkombinationen eingehalten werden, da sonst die Gefahr besteht, daß sich die Verstärkungswendel aus Hartplastik von den Schläuchen aus Weichplastik beim Gebrauch löst. Auch können Abdichtungsprobleme bei der Montage der Anschlüsse, insbesondere beim Anbringen der Nippel an den Enden der auf bestimmte Längen geschnittenen Schlauchstücke auftreten.

Der Erfindung liegt deshalb die Aufgabe zugrunde, einen Brauseschlauch zu schaffen, der in einfacher Weise herstellbar ist und eine sichere Montage der Anschlußstücke ermöglicht.

Die Erfindung ist dadurch gekennzeichnet, daß das Material der Verstärkungsrippen den Innenschlauch vollflächig umgibt und die Verstärkungsrippen aus diesem Material herausgeformt sind.

Dadurch, daß die Verstärkungsrippen aus dem weichen Zustand auf dem Innenschlauch verfestigt sind, erübrigt sich eine Vorfertigung der Verstärkungsrippen und eine besondere Aufwickeleinrichtung. Auch hat die aus den Verstärkungsrippen geformte Verstärkungswendel keine Rückstellkräfte, die zu einer Aufweitung und zu einer Ablösung vom Innenschlauch führen könnten. Vielmehr ist die Verstärkungswendel dadurch, daß sie in Wendelform aus dem weichen Zustand verfestigt ist, spannungsfrei. Gleichzeitig kann durch den flächigen Verbund mit dem Innenschlauch, eine gute Haftfestigkeit und gute Abdichtung erzielt werden. Ein Kleber wird hierzu nicht benötigt. Vorzugsweise ist der gesamte Schlauch frei von zusätzlichen Klebstoffen. In Längsrichtung verlaufende Verstärkungsfäden können mit Hilfe des plastischen Materials der Verstärkungsrippen problemlos am Innenschlauch in der Lage fixiert und befestigt werden. Sie können aber auch in den Innenschlauch mindestens teilweise eingebettet oder mit diesem verklebt sein. Die Verstärkungsrippen bestehen vorzugsweise aus Weichplastik, wodurch bei ausreichender Radialverstärkung trotz der festen Haftung am Innenschlauch eine gute Flexibilität erreicht wird.

Bei einer bevorzugten Ausführungsform bestehen die Verstärkungsrippen aus einem thermoplastischen Schaumstoff. Hierzu kann bei der Herstellung des Brauseschlauches ein thermoplastisches Material verwendet werden, das ein Treibmittel enthält. Das thermoplastische Material kann dann mit geringerer Dicke als der gewünschten Enddicke auf die Außenseite des Innenschlauches aufgetragen werden und geht dann beim Abkühlen und Verfestigen auf die gewünschte Dicke auf. Vorzugsweise umgibt das Material der Verstärkungsrippen den Innenschlauch vollflächig, wobei die Verstärkungsrippen aus diesem Material an den gewünschten Stellen wendelförmig herausgeformt sind. Um diese Herausformung aus der vollflächigen Beschichtung zu erreichen, wird die Beschichtung an den Stellen, die später die Vertiefung bilden sollen, an einer radialen Ausdehnung des Materials durch Aufschäumen gehindert, insbesondere radial begrenzt. Die radiale Begrenzung, die vorzugsweise von einem wendelförmig umlaufenden Band gebildet ist, kann gleichzeitig bewirken, daß das Material aus den begrenzten Bereichen in die Rippenbereiche fließt und die Rippenbildung verstärkt. Die radiale Begrenzung kann in Form eines dekorativen Bandes vorliegen, insbesondere verspiegelt sein, und verbleibt vorzugsweise im fertigen Brauseschlauch. Das Band kann aus einem Material bestehen, das sich nicht mit dem noch weichen Thermoplasten, den es begrenzt, verbindet. Es liegt dann im wesentlichen lose auf dem Material nach dessen Verfestigung auf. Das Band kann mit dem darunter liegenden thermoplastischen Material aber auch fest verbunden, insbesondere verklebt oder verschweißt sein.

Bei einer bevorzugten Ausführungsform bestehen der Innenschlauch und die Verstärkungsrippen und vorzugsweise auch der Außenschlauch aus dem gleichen thermoplastischen Kunststoff, insbesondere Weich-Polyvinylchlorid. Dabei können die Kunststoffe je nach Bedarf transparent ausgebildet oder unterschiedlich eingefärbt sein. Die Verstärkungsrippen sind mit Vorteil mit dem Innenschlauch und vorzugsweise auch mit dem Außenschlauch verschweißt. Durch die Verwendung gleicher Kunststoffe wird eine solche Verschweißung begünstigt.

Der thermoplastische Schaumstoff ist vorzugsweise ein geschlossenzelliger Schaumstoff. Die Verstärkungsrippen weisen vorzugsweise eine glatte Oberfläche auf. Die radial begrenzten vertieften Zwischenabschnitte zwischen den Verstärkungsrippen besitzen normalerweise ein im Vergleich zum Material der Rippen vermindertes Porenvolumen pro Volumen-Einheit und können sogar im wesentlichen frei von Poren sein. Die Rippen selbst haben vorzugsweise einen im wesentlichen rechteckigen bis quadratischen Querschnitt. Sie können an der Außenseite auch abgerundet sein. Ihre Breite kann in etwa halb so groß bis doppelt so groß wie der durch die dazwischen liegenden Vertiefungen gebildete lichte Abstand sein und entspricht in der Regel etwa der Breite der Vertiefung. Diese Verhältnisse lassen sich in großer Bandbreite variieren. Es ist auch möglich, daß man die Rippen sich beim Aufschäumen etwas verbreitern läßt, wobei sie gegebenenfalls die Ränder der zur radialen Begrenzung vorgesehenen Auflage etwas überlappen können. Der Außenschlauch überbrückt in der Regel die Verstärkungsrippen. In den Zwischenräumen zwischen den Verstärkungsrippen an der Innenseite des Außenschlauches können wendelförmige Hohlräume bestehen. Der Außenschlauch kann im Bereich der Vertiefungen auch verjüngt bzw. eingezogen sein, je nach Wunsch bis auf den Grund der Vertiefungen.

Zur Herstellung des Brauseschlauches wird der für die Bildung der Verstärkungsrippen verwendete thermoplastische Kunststoff in erwärmtem plastischen Zustand um den Innenschlauch herum auf dessen Oberfläche extrudiert. Dabei ist das Material beim Auftreten auf den Innenschlauch noch plastisch und verfestigt sich erst auf dem Innenschlauch. Das plastische Material kann bereits in dem Querschnitt aufgeformt werden, der dem Endquerschnitt der Verstärkungsrippen entspricht. Wird ein aufschäumbares thermoplastisches Material verwendet, dann ist der Querschnitt beim Auftragen entsprechend kleiner gehalten.

Das Aufformen bzw. Auftragen kann in der Weise erfolgen, daß der Auftrag relativ zum Innenschlauch wendelförmig um diesen herum erfolgt. Bei einer bevorzugten Ausführungsform wird der gesamte Innenschlauch mit dem warmen, im plastischen Zustand vorliegenden Kunststoff in Form eines aufschäumbaren treibmittelhaltigen plastischen Materials vollflächig umspritzt. Zur Bildung der vertieft liegenden Zwischenräume zwischen den Verstärkungsrippen werden die für die Zwischenräume vorgesehenen Stellen vorzugsweise durch wendelförmiges Umwickeln mit einem Band an einer radialen Volumenvergrößerung gehindert, wogegen sich die Rippen an den Zwischenstellen durch Aufschäumen ungehindert ausbilden und durch Abkühlen verfestigen können.

Der Außenschlauch kann dann in üblicher Weise auf den mit den Rippen versehenen Innenschlauch aufextrudiert werden, wobei, wenn erwünscht, durch geeignete Temperaturführung eine Verschweißung zwischen dem Außenschlauch und der Oberseite der Rippen vorgenommen werden kann.

Weitere Merkmale und Einzelheiten der Erfindung ergeben sich aus der nachfolgenden Beschreibung von bevorzugten Ausführungsformen der Erfindung in Verbindung mit den Unteransprüchen und der Zeichnung. In der Zeichnung zeigen:

Fig. 1 einen Längsschnitt durch einen Brauseschlauch nach der Erfindung;

Fig. 2 einen Querschnitt entlang der Linie II-II nach Fig. 1;

Fig. 3 einen Längsschnitt durch eine andere Ausführungsform der Erfindung; und

Fig. 4 einen Querschnitt entlang der Linie IV-IV nach Fig. 3.

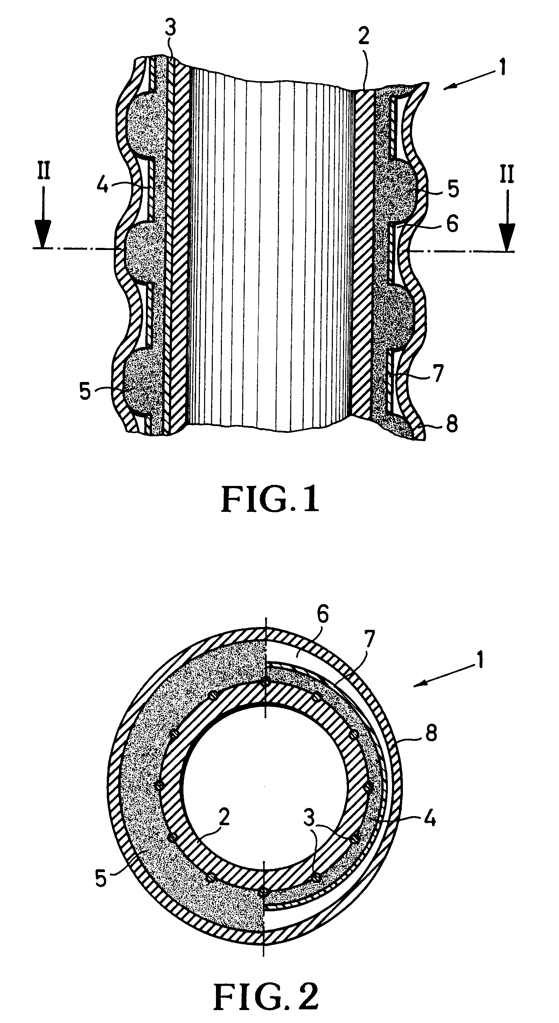

Bei der in der Zeichnung in den Fig. 1 und 2 dargestellten Ausführungsform der Erfindung weist ein Brauseschlauch 1 einen Innenschlauch 2 aus Weich-PVC auf, der an seinem Außenumfang mit längs verlaufenden multifilen Verstärkungsfäden 3 belegt ist. Der Innenschlauch 2 ist auf seiner Außenseite unter Einbettung der Verstärkungsfäden vollflächig mit einem thermoplastischen Schaumstoff überzogen, der durch Verschweißung mit dem Innenschlauch verbunden ist. Die dadurch gebildete Schaumstoffschicht 4 weist an ihrer Außenseite in regelmäßigen Abständen rippenförmige Erhöhungen 5 auf, die aus dem Schaumstoffmaterial gebildet sind und wendelförmig um den Innenschlauch verlaufen. Die Dicke der Schaumstoffschicht 4 zwischen den Verstärkungsrippen 5 entspricht in etwa ein Fünftel bis zwei Drittel, vorzugsweise ein Drittel bis ein Halb der Gesamtdicke der Verstärkungsrippen, wenn diese, ausgehend von der Grenzfläche zwischen der Schaumstoffschicht 4 und der Außenfläche des Innenschlauches 2 gemessen ist. Die Breite der Vertiefungen 6 zwischen den Verstärkungsrippen ist etwa gleich groß wie die der Verstärkungsrippen selbst. Der Grund der Vertiefungen 6 ist mit einem Dekorband 7 belegt, das beispielsweise ein verspiegeltes Kunststoffband sein kann.

Die Schaumstoffschicht 4 enthält geschlossene Zellen, wobei die Zellengröße im Bereich der Verstärkungsrippen 5 erheblich größer ist als im Bereich der Vertiefungen 6. Zwischen den Verstärkungsrippen 5 und dem Grunde der Vertiefungen 6, d.h. der weniger expandierten Schaumstoffschicht, bestehen jedoch keine Phasengrenzen.

Der Brauseschlauch 1 weist an seiner Außenseite einen Außenschlauch 8 auf, der an der Oberseite der Verstärkungsrippen vollflächig anliegt und im Bereich der Vertiefungen 6 etwas eingezogen ist. Der Außenschlauch besteht ebenfalls wie der Innenschlauch und die Schaumstoffschicht 4 aus Weich-PVC und ist mit der Oberseite der Verstärkungsrippen 5 gerade so stark verschweißt, daß noch kein Ineinanderfließen der Materialien erfolgt ist.

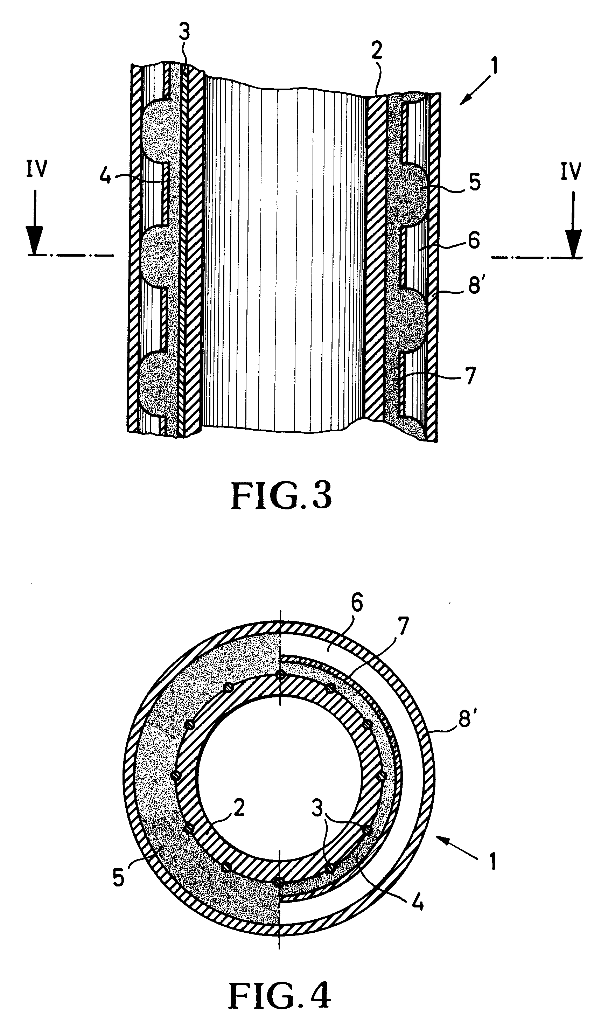

Die Schaumstoffschicht 4 und damit auch die Verstärkungsrippen 5 besitzen eine dekorative Einfärbung, die mit der des Dekorbandes 7 harmonisch abgestimmt ist. Der Außenschlauch 8 ist farblos und durchsichtig, kann aber auch eingefärbt und/oder pigmentiert sein. Bei der in den Fig. 3 und 4 dargestellten Ausführungsform sind einander entsprechende Teile mit denselben Bezugszahlen versehen. Der Unterschied besteht lediglich darin, daß der Außenschlauch 8' parallel zum Innenschlauch 2 verläuft, d.h. im Bereich der Vertiefungen 6 nicht eingezogen ist.

Die Herstellung des Schlauches kann in der Weise erfolgen, daß der vorgefertigte Innenschlauch aus Weich-PVC mit Hilfe einer Ringdüse, durch die der Innenschlauch geführt wird, mit einem noch plastischen thermoplastischen Material, insbesondere PVC, das mit einem Treibmittel versetzt ist, beschichtet wird. Im wesentlichen unmittelbar danach wird das Dekorband 7 mit Abstand wendelförmig um den kontinuierlich in Längsrichtung geförderten Schlauch gewickelt, so daß das plastische Material nur im Bereich der Abstände zwischen dem Band aufschäumen kann und dann erhärtet, wogegen das plastische Material im Bereich des Bandes unter Bildung der Vertiefungen 6 im wesentlichen unexpandiert bleibt und sich in diesem Zustand verfestigt. Anstelle der hier vorgesehenen schlauchförmigen Umschichtung des Innenschlauches an dessen Außenseite kann bei einer anderen, hier nicht dargestellten Ausführungsform die Ausbildung der Verstärkungsrippen dadurch erfolgen, daß das erhitzte und somit plastische thermoplastische Material wendelförmig um den Außenschlauch herum auf dessen Außenfläche aufgetragen wird, wobei die Vertiefungen durch den lichten Abstand der wendelförmigen Rippen gebildet wird. Auch bei diesem wendelförmigen Aufformen der Verstärkungsrippen wird eine vollflächige Verbindung mit der Außenfläche des Innenschlauches erreicht. Hierzu kann das plastische Material als Vollmaterial mit dem endgültigen Querschnitt aufgetragen werden. Es kann jedoch auch hier treibmittelhaltiges Material in entsprechend geringerer Stärke aufgetragen werden, das dann bis zu seiner Verfestigung bis zur gewünschten Höhe aufgeht.

**Patentansprüche**

1. Brauseschlauch (1) mit einem flexiblen Innenschlauch (2) und einem flexiblen Außenschlauch (8), die im Abstand koaxial Zueinander angeordnet sind, und wendelformig umlaufenden Verstärkungsrippen (5) aus thermoplastischem Material, die aus dem plastischen Zustand heraus um den Innenschlauch (2) geformt und zumindest mit der Außenfläche des Innenschlauches (2) fest verbunden sind und mindestens bereichsweise Abstandhalter zwischen Innenund Außenschlauch bilden, dadurch gekennzeichnet, daß das Material (4) der Verstärkungsrippen (5) den Innenschlauch (2) vollflächig umgibt und die Verstärkungsrippen (5) aus diesem Material herausgeformt sind.

2. Brauseschlauch nach Anspruch 1, dadurch gekennzeichnet, daß die Verstärkungsrippen (5) aus einem thermoplastischen Schaumstoff bestehen.

3. Brauseschlauch nach Anspruch 1 oder 2, dadurch gekennzeichnet, daß in den Zwischenräumen (6) eine Auflage (7) parallel zum Innenschlauch (2), vorzugsweise wendelförmig um diesen herum verläuft.

4. Brauseschlauch nach einem der Ansprüche 1 bis 3, dadurch gekennzeichnet, daß das Überzugsmaterial (4) zwischen den Verstärkungsrippen (5) durch eine Auflage (7) radial begrenzt ist.

5. Brauseschlauch nach Anspruch 4, dadurch gekennzeichnet, daß die radiale Begrenzung durch ein wendelförmig verlaufendes Band (7) erfolgt, dessen Breite dem lichten Abstand zwischen zwei aufeinanderfolgenden Gängen der wendelförmig verlaufenden Verstärkungsrippen (5) entspricht.

6. Brauseschlauch nach einem der Ansprüche 4 oder 5, dadurch gekennzeichnet, daß die das Überzugsmaterial (4) zwischen den Verstärkungsrippen radial begrenzende Auflage lose auf den radial begrenzten Abschnitten des thermoplastischen Rippenmaterials aufliegt.

7. Brauseschlauch nach einem der vorhergehenden Ansprüche, dadurch gekennzeichnet, daß der Innenschlauch (2) und die Verstärkungsrippen (5) und vorzugsweise auch der Außenschlauch (8, 8') aus dem gleichen thermoplastischen Kunststoff, insbesondere aus Weich-Polyvinylchlorid bestehen.

8. Brauseschlauch nach einem der vorhergehenden Ansprüche, dadurch gekennzeichnet, daß die Verstärkungsrippen (5) mit dem Innenschlauch (2) und vorzugsweise auch mit dem Außenschlauch (8, 8') verschweißt sind.

9. Brauseschlauch nach einem der Ansprüche 2 bis 8, dadurch gekennzeichnet, daß der thermoplastische Schaumstoff (4) geschlossenzellig ausgebildet ist und die Verstärkungsrippen (5) eine glatte Oberfläche aufweisen.

10. Brauseschlauch nach einem der Ansprüche 3 bis 9, dadurch gekennzeichnet, daß die radial begrenzten vertieften Zwischenabschnitte des Schaumstoffes (4) zwischen den Verstärkungsrippen (5) ein im Vergleich zum Material der Rippen vermindertes Porenvolumen pro Volumen-Einheit besitzt, insbesondere im wesentlichen frei von Poren ist.

11. Brauseschlauch nach einem der vorhergehenden Ansprüche, dadurch gekennzeichnet, daß im wesentlichen in Längsrichtung verlaufende Verstärkungsfäden mindestens teilweise in den Innenschlauch eingelassen sind.

12. Verfahren zur Herstellung des Brauseschlauches nach einem der vorhergehenden Ansprüche, dadurch gekennzeichnet, daß in plastischem Zustand vorliegender erwärmter thermoplastischer Kunststoff um einen Innenschlauch (2) auf dessen Außenfläche zur Bildung wendelförmiger Verstärkungsrippen (5) extrudiert wird und das Material der Verstärkungsrippen den Innenschlauch vollflächig umgibt.

13. Verfahren nach Anspruch 12, dadurch gekennzeichnet, daß der in plastischem Zustand vorliegende Kunststoff, vorzugsweise mit dem für die Verstärkungsrippen (5) vorgesehenen Querschnitt, wendelförmig umlaufend um den Innenschlauch unter direkter Ausbildung der Verstärkungsrippen extrudiert wird.

14. Verfahren nach Anspruch 12, dadurch gekennzeichnet, daß der in plastischem Zustand vorliegende Kunststoff in Form eines aufschäumbaren treibmittelhaltigen, thermoplastischen Kunststoffes vollflächig um den Innenschlauch gespritzt wird und das Beschichtungsmaterial zur Bildung der vertieft liegenden Zwischenräume zwischen den Verstärkungsrippen durch wendelförmiges Umwickeln mit einem Band an einer radialen Volumenvergrößerung gehindert wird.

15. Verfahren nach einem der Ansprüche 12 bis 14, dadurch gekennzeichnet, daß der Außenschlauch um den Innenschlauch (2) und die Verstärkungsrippen (5) im wesentlichen nach der Verfestigung der Rippen koextrudiert wird.

## Claims

1. Shower hose (1) with a flexible inner hose (2) and a flexible outer hose (8), which are reciprocally coaxially arranged in spaced manner, and helically directed, thermoplastic material reinforcing ribs (5), which are shaped from the plastic state around the inner hose (2) and at least firmly connected to the outer surface of the inner hose (2) and which at least zonally forms spacers between the inner and outer hoses, characterized in that the material (4) of the reinforcing ribs (5) surrounds in full-surface manner the inner hose (2) and the reinforcing ribs (5) are shaped from this material.

2. Shower hose according to claim 1, characterized in that the reinforcing ribs (5) are made from a thermoplastic foam.

3. Shower hose according to claims 1 or 2, characterized in that in the gaps (6), a support (7) is provided parallel to the inner hose (2) and preferably passes helically around the latter.

4. Shower hose according to one of the claims 1 to 3, characterized in that the coating material (4) between the reinforcing ribs (5) is radially limited by a support (7).

5. Shower hose according to claim 4, characterized in that the radial limitation is provided by a helically directed strip (7), whose width corresponds to the clear spacing between two successive turns of the helically directed reinforcing ribs (5).

6. Shower hose according to one of the claims 4 or 5, characterized in that the support radially limiting the coating material (4) between the reinforcing ribs rests loosely on the radially bounded portions of the thermoplastic rib material.

7. Shower hose according to one of the preceding claims, characterized in that the inner hose (2) and the reinforcing ribs (5) and preferably also the outer hose (8, 8') are made from the same thermoplastic material, particularly flexible polyvinyl chloride.

8. Shower hose according to one of the preceding claims, characterized in that the reinforcing ribs (5) are welded to the inner hose (2) and preferably also to the outer hose (8, 8').

9. Shower hose according to one of the claims 2 to 8, characterized in that the thermoplastic foam (4) is constructed in closed-cell manner and the reinforcing ribs (5) have a smooth surface.

10. Shower hose according to one of the claims 3 to 9, characterized in that the radially limited, recessed intermediate portions of the foam (4) between the reinforcing ribs (5) have a reduced pore volume per volume unit compared with the material of the ribs and is in particular substantially free from pores.

11. Shower hose according to one of the preceding claims, characterized in that substantially longitudinally directed reinforcing threads are at least partly placed in the inner hose.

12. Process for producing the shower hose according to one of the preceding claims, characterized in that warmed thermoplastic material in the plastic state is extruded onto the outer surface of the inner hose (2) for forming helical reinforcing ribs (5) and that the material of the reinforcing ribs surrounds in full-surface manner the inner hose.

13. Process according to claim 12, characterized in that the plastics material in the plastic state, preferably with the cross-section provided for the reinforcing ribs (5), is extruded helically round the inner hose and accompanied by the direct formation of the reinforcing ribs.

14. Process according to claim 12, characterized in that the plastics material in the plastic state is injected in the foam of a foamable, blowing agent-containing, thermoplastic material in full-surface manner around the inner hose and the coating material for forming the recessed gaps between the reinforcing ribs is prevented from undergoing a radial volume increase by helical enveloping with a strip.

15. Process according to one of the claims 12 to 14, characterized in that the outer hose is coextruded around the inner tube (2) and the reinforcing ribs (5) substantially following the hardening of the ribs.

**Revendications**

1. Tuyau de douche (1) conprenant un tuyau flexible intérieur (2) et un tuyau flexible extérieur (8) qui sont disposés à distance, coaxialement l'un par rapport à l'autre, et des nervures périphériques de renforcement (5) en spirale, en matière thermoplastique, qui sont formées à partir de l'état plastique autour du tube intérieur (2) et sont au moins reliées de façon fixe à la surface extérieure du tube intérieur (2) et constituent au moins dans certaines zones des entretoises entre le tube intérieur et le tube extérieur, caractérisé en ce que la matière (4) des nervures de renforcement (5) entoure sur toute sa surface le tube intérieur (2) et en ce que les nervures de renforcement (5) sont formées à partir de cette matière.

2. Tuyau de douche selon la revendication 1, caractérisé en ce que les nervures de renforcement (5) sont composées d'une matière de mousse thermoplastique.

3. Tuyau de douche selon la revendication 1 ou 2, caractérisé en ce qu'un revêtement (7) entoure, de préférence en spirale, le tube intérieur (2), parallèlement à celui-ci, dans les espaces intermédiaires (6).

4. Tuyau de douche selon l'une des revendications 1 à 3, caractérisé en ce que la matière de recouvrement (4) est limitée radialement par un revêtement (7) entre les nervures de renforcement (5).

5. Tuyau de douche selon la revendication 4, caractérisé en ce que la limitation radiale est réalisée par une bande (7) en spirale dont la largeur correspond à la distance libre entre deux jeux successifs des nervures de renforcement (5) de tracé en spirale.

6. Tuyau de douche selon l'une des revendications 4 ou 5, caractérisé en ce que le revêtement limitant radialement la matière de recouvrement (4) entre les nervures de renforcement, repose de façon lâche sur les parties limitées radialement de la matière thermoplastique des nervures.

7. Tuyau de douche selon l'une des revendications précédentes, caractérisé en ce que le tube intérieur (2) et les nervures de renforcement (5), et de préférence le tube extérieur (8, 8'), sont composés de la même matière thermoplastique, en particulier de chlorure de polyvinyle souple.

8. Tuyau de douche selon l'une des revendications précédentes, caractérisé en ce que les nervures de renforcement (5) sont soudées au tuyau intérieur (2) et de préférence aussi au tuyau extérieur (8, 8').

9. Tuyau de douche selon l'une des revendications 2 à 8, caractérisé en ce que la matière de mousse thermoplastique (4) est réalisée à cellules fermées et en ce que les nervures de renforcement (5) présentent une surface lisse.

10. Tuyau de douche selon l'une des revendications 3 à 9, caractérisé en ce que les parties intermédiaires enfoncées, limitées radialement, de la matière de mousse (4) située entre les nervures de renforcement (5), possèdent, par rapport à la matière des nervures, un moindre volume de pores par unité de volume, et sont en particulier sensiblement exemptes de pores.

11. Tuyau de douche selon l'une des revendications précédentes, caractérisé en ce que des fils de renforcement de tracé sensiblement longitudinal sont au moins partiellement encastrés dans le tuyau intérieur.

12. Procédé de fabrication du tuyau de douche selon l'une des revendications précédentes quelconques, caractérisé en ce qu'une matière thermoplastique chauffée, à l'état plastique, est extrudée autour d'un tube intérieur (2) sur la surface extérieure de celui-ci pour constituer des nervures de renforcement (5) en spirale et en ce que la matière des nervures de renforcement entoure le tube intérieur sur toute sa surface.

13. Procédé selon la revendication 12, caractérisé en ce que la matière à l'état plastique est de préférence extrudée selon la section transversale prévue pour les nervures de renforcement (5), en entourant en spirale le tube intérieur et en formant directement les nervures de renforcement.

14. Procédé selon la revendication 12, caractérisé en ce que la matière à l'état plastique est pulvérisée autour du tube intérieur sur toute sa surface sous forme d'une matière thermoplastique pouvant mousser, contenant des agents gonflants, et en ce que la matière d'enrobage destinée à former les espaces intermédiaires situés plus en profondeur entre les nervures de renforcement est enpêchée de croître radialement en volume par une bande enroulée en spirale qui l'entoure.

15. Procédé selon l'une des revendications 12 à 14, caractérisé en ce que le tube extérieur est coextrudé autour du tube intérieur (2) et des nervures de renforcement (5), sensiblement après la fixation des nervures.

FIG.1

FIG.2

FIG.3

FIG.4